# EUROPEAN PATENT APPLICATION

(11) **EP 4 425 396 A1**
(43) Date of publication of application: **04.09.2024**
(21) Application number: 23159196.7
(22) Date of filing: 28.02.2023
(51) Int. Cl.: G06Q 10/0631, G06Q 10/0639, G06Q 50/04

(54) **METHOD FOR OPERATING A PLURALITY OF EDGE PRODUCTION RESOURCES BY A MANUFACTURING EXECUTION SYSTEM**

(71) Applicant: Siemens Aktiengesellschaft, 80333 München (DE)
(72) Inventor: ZAHORCAK, Vladimir, 900 32 Borinka (SK); TABAEI BEFROUE, Mitra, 1030 Wien (AT); AVASALCAI, Cosmin Florin, 1030 Wien (AT); ANGERER, Lukas, 1210 Wien (AT); JONES, Scott, 28277 Charlotte (US); MAGAGNINI, Marco, 16137 Genova (IT)
(74) Representative: Siemens Patent Attorneys

(57) **Abstract**

It is the objective of the present invention to provide a method for operating a plurality of edge production resources by a manufacturing execution system that requires less investments into the centralized MES architecture and guarantees low latency in data transmissions and high throughput of manufactured products.

This objective is achieved according to the present invention by a method for operating a plurality of edge production resources by a manufacturing execution system, said method, comprising the steps of:
a) providing a number of interlocking edge apps and track and trace edge apps to the production resources at shopfloor level;
b) providing a number of higher-level interlocking apps and higher-level track and trace apps also related to the edge production resources at an elevated supervision level wherein the edge apps provide only a subset of functionalities as compared to the central, higher-level apps at the elevated supervision level;
c) creating a bill of process at the elevated supervision level thereby defining a number of products to be produced on at least one of the edge production resources;
d) loading the data for the production of a subset of the number of products defined in the bill of process into the cache of the respective edge production resources;
e) producing the subset of the number of products according to the defined bill of process by the respective edge production resources;
f) exchanging data between the edge apps and the higher level apps during the production of the subset according to the functionalities defined in the edge apps and in the higher-level apps;
g) after completion of the production of the subset of the number of products, deleting all data related to this subset of the products in the caches of the edge production resources, and
h) processing the data related to this subset of the number of products in the higher-level apps according to the functionalities provided by these higher-level apps.

Thus, the present method paths a way to distribute the track & trace and interlocking functionalities in a smart way over the MES architecture thereby benefitting from small and flexible edge structures and reliable and powerful higher level structures. In particular, the deletion of all data related to a product for that the production is finished, allows to "reset" the edge apps and refresh them functionality-wise and storage-wise for the production of the next bunch of products.

## Description

The present invention relates to a method for operating a plurality of edge production resources by a manufacturing execution system.

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family with the field of manufacturing operation management (MOM). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like. These IT solutions are subject to a brought variety of industrial standards, such as established ANSI standards like ISA-95, ISA-88, and ISA-106 targeting discrete, batch, and continuous industries, respectively.

These demands very often require in the backbone rather complicated and sophisticated software solutions which enable the approach of totally integrated automation. In view of this, the software engineers very often use production modeling software to define the plant model and its standard operating procedures and create the respective new software by means of a high-level graphical language which identifies the workflow of activities within the software. Subsequently, this string/term of high-level graphical language is translated into a client based software language executable on the machine language level. This translation requires tremendous efforts in programming and need serious testing to check whether the translated program behaves the same as the original string/term of the high level graphical language.

Nonetheless, there exists the permanent demand to minimize the risk of non-conformance costs and to achieve cost effective compliance. Thus, quality control needs to be integrated into manufacturing of products in discrete, process or hybrid industries. However, ensuring quality during every stage of manufacturing is challenging. On one hand production systems should achieve multitude of key performance indicators (KPIs) like production throughput, short cycle times, capacity utilization, first pass yield or overall equipment effectiveness (OEE). On the other hand, they need to always assure business continuity and avoid any downtime of production lines.

The current state of the art follows the established ANSI standards like ISA-95, ISA-88, and ISA-106 targeting discrete, batch, and continuous industries, respectively. The consensus is to use a rather centralized architecture where typically three different levels are present:
(i) a centralized Enterprise Resource Planning (ERP) residing usually in a remote location overseeing multiple plants,
(ii) a centralized Manufacturing Execution System (MES) at the plant level, and
(iii) control systems that at the shopfloor collect production data.

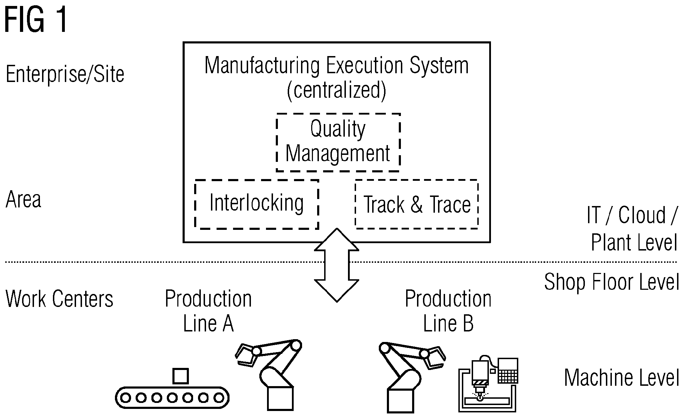

Figure 1 presents an overview of such a system architecture representing an MES that controls and monitors the overall manufacturing process happening in work centers, such as individual production lines and/or production cells. Using real-time architecture and robust traceability of MES, manufacturers implement interlocking material verification of products and processes according to the defined product routing and quality. Therefore, they can detect possible failures in real-time during every stage of manufacturing and provide early corrective measures. For example, MES halts production if quality tolerances are out of acceptable boundaries and subsequently records and links the traceability to the genealogy of the product being produced for real-time or later analysis.

For larger factories with hundreds of production machines, centralized interlocking mechanism of MES requires horizontal and vertical scaling of computing resources to address substantial number of interlocking checks for each production step, i.e., work operation, production segment. To ensure good response time to these requests and thus achieving high production throughput and short cycle times KPIs, a low latency/high throughput network infrastructure must be put in place between the production machines and the central MES, which can be even deployed in a public or private cloud. However, total cost of ownership of such network infrastructure, namely installation, configuration, commissioning, and maintenance is high. Moreover, MES must fulfill high availability requirements to avoid any production downtimes. Finally, all such requirements concerning low latency, high throughput and availability increase overall costs in a centralized MES.

Thus, it is the objective of the present invention to provide a method for operating a plurality of edge production resources by a manufacturing execution system that requires less investments into the centralized MES architecture and guarantees low latency in data transmissions and high throughput of manufactured products.

This objective is achieved according to the present invention by a method for operating a plurality of edge production resources by a manufacturing execution system, said method, comprising the steps of:
a) providing a number of interlocking edge apps and track and trace edge apps to the production resources at shopfloor level;
b) providing a number of higher-level interlocking apps and higher-level track and trace apps also related to the edge production resources at an elevated supervision level wherein the edge apps provide only a subset of functionalities as compared to the central, higher-level apps at the elevated supervision level;
c) creating a bill of process at the elevated supervision level thereby defining a number of products to be produced on at least one of the edge production resources;
d) loading the data for the production of a subset of the number of products defined in the bill of process into the cache of the respective edge production resources;
e) producing the subset of the number of products according to the defined bill of process by the respective edge production resources;
f) exchanging data between the edge apps and the higher level apps during the production of the subset according to the functionalities defined in the edge apps and in the higher-level apps;
g) after completion of the production of the subset of the number of products, deleting all data related to this subset of the products in the caches of the edge production resources, and
h) processing the data related to this subset of the number of products in the higher-level apps according to the functionalities provided by these higher-level apps.

Thus, the present method paths a way to distribute the track & trace and interlocking functionalities in a smart way over the MES architecture thereby benefitting from small and flexible edge structures and reliable and powerful higher level structures. In particular, the deletion of all data related to a product for that the production is finished, allows to "reset" the edge apps and refresh them functionality-wise and storage-wise for the production of the next bunch of products.

Preferably, in the caches of the edge production resources only the data related to the current products and the future products to be produced is downloaded.

A further preferred embodiment of the present invention can provide for a synchronization mechanism being enabled to send periodic updates from the edge apps of a first number of edge production resources to the higher level apps which in return publish the new received updates to a topic where edge apps of a second number of other edge production resources are subscribed.

Preferably, a publication/subcription mechanism can be combined with a cache mechanism, where the received data is cached at the location of the deployed edge apps before a particular production starts.

In a further preferred embodiment of the present invention, aggregated data can be transferred from higher-level track & trace apps down to the edge apps wherein the higher-level track & trace app can handle all work orders and the aggregated data can be extracted into multiple groups that are relevant to the production lines at the shopfloor level thereby allowing the edge apps to subscribe to only data for the respective edge production resource in the respective production line.

Alternatively or also additionally, the aggregated data can be sorted into multiple topics based on a bill of process (BOP) of all products to be manufactured thereby offering the possibility for any edge track & trace app to subscribe to the topics of the aggregated data only for products that require operations that can be performed by edge production resources in a specific production line. As a preferred example, an edge app in said production line comprising an assembly robot can download only the topic that provides data only for products requiring assembling by this assembly robot.

Preferred embodiments of the present invention are given in the additional dependent claims.

Preferred embodiments are hereinafter described in more detail with reference to the attached drawings which depict in:
- Figure 1: schematically an overview of a system architecture representing an MES system that controls and monitors the overall manufacturing process happening in work centers, i.e., production lines or production cells;
- Figure 2: schematically an example of a hybrid or hierarchical deployment of MES apps with a modular hierarchical design for quality assurance and track & trace of manufactured products;
- Figure 3: schematically an example of data model differences in various hierarchical levels of the MES; and
- Figure 4: schematically the caching of data on edge device at shopfloor level.

The present invention represents a modern modular architecture of a Manufacturing Execution Systems (MES) based on microservice architecture that allows for the decomposition of the various MES functionalities into apps. The modular MES apps can, in fact, be independently developed and deployed anywhere in the deployment spectrum: on cloud, on premises and on edge devices. Due to the nature of interlocking and traceability also known as track & trace functionalities of MES, it is highly desirable to run and have these functionalities near the production at the shopfloor level to achieve low latency, high throughput, and higher availability of MES data.

The present invention therefore provides interlocking and track & trace functionalities as individual apps, deploying them on edge devices and having them run directly on shopfloor. This idea is, especially, in line with the underlying premise of edge computing paradigm stating that to improve the response time and achieve low latency, functionality is moved closer to the edge of the network. Moreover, the distributed nature of the apps allows to deploy several instances of them at the edge level of the MES architecture while having also instances running in the higher levels, i.e., either at the plant level or in the cloud.

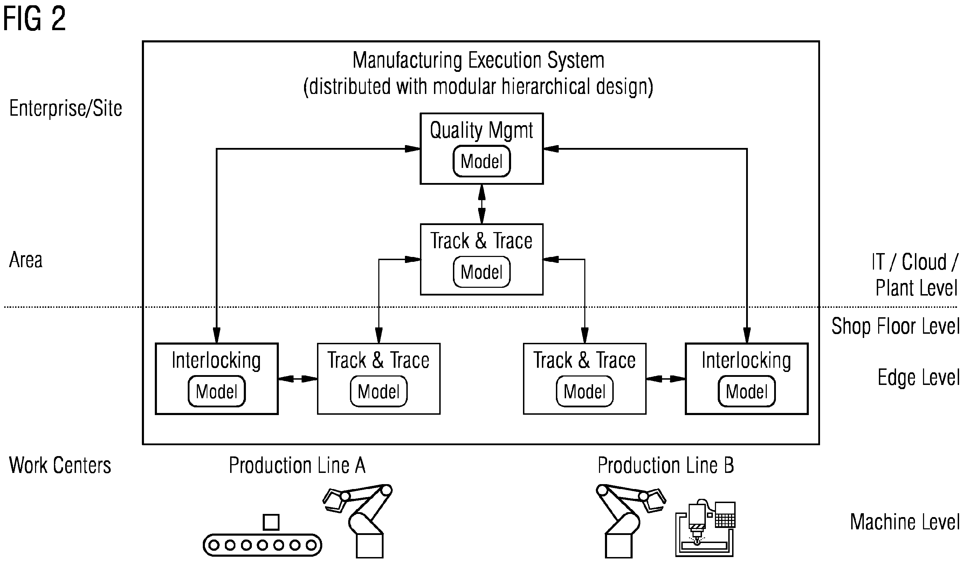

Figure 2 depicts an example of a hybrid or hierarchical deployment of MES apps with a modular hierarchical design for quality assurance and track & trace of manufactured products. In this figure, there are two work centers on the shopfloor, each with its own interlocking and track & trace apps running on edge devices and one central track & trace app and quality management app running at area, site or enterprise level.

Especially in hierarchical deployment, instances of an app running on edge devices may differ in terms of functionalities and consequently data models and APIs from instances running in the higher levels. For example, in Figure 2, an instance of track & trace dedicated to a work center receives traceability data "only" for each product instance processed at that work center. The instance of an app running in the higher levels does not necessarily receive traceability data for each product instance directly from machines or human operators. Rather, it aggregates the collected data in each edge level instance and provides a higher-level view.

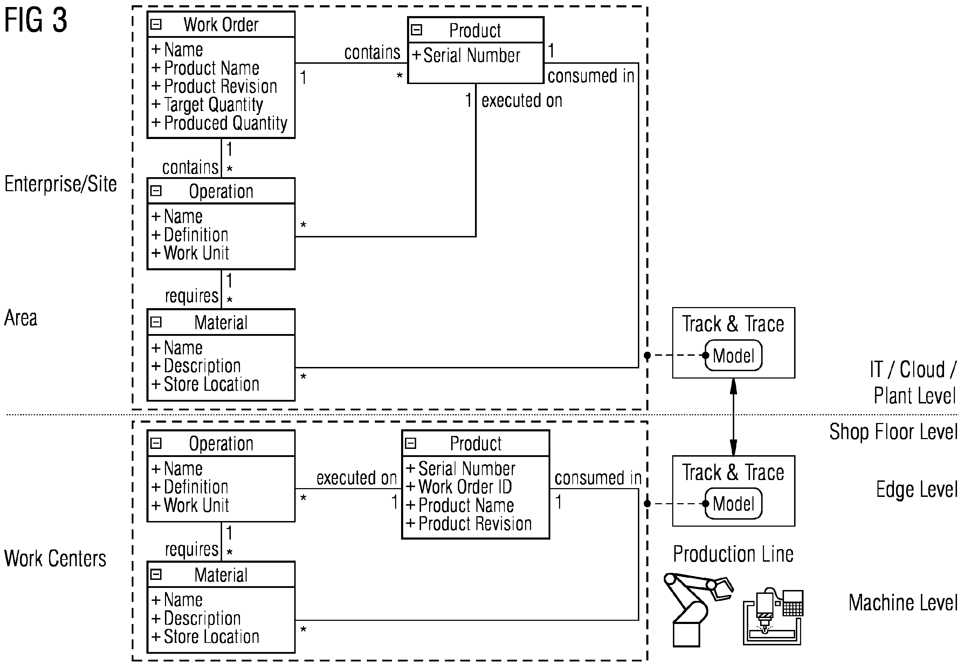

Figure 3 provides an example of data model differences in various hierarchical levels, here an specific examples of track & trace data models in different hierarchical levels. For example, Work Order entity in the app data model, deployed on a higher level, is used for tracking the entire production of a product batch, if deployed at the area level, or can track information from the entire enterprise, if deployed at the enterprise/site level. Product entity in the edge app data model, however, stores tracking data of individual products of a batch "only" during the production in the corresponding work center. Individual products of a batch are identified by Serial Number in Product.

Additionally, according to an especially preferred feature of the present invention the amount of data as well as retention of data in the edge and higher levels apps differ. In the present example, in Figure 3, the apps deployed on a higher level might be able to persist data for all products of a work order (batch) depending on the level and its capabilities. However, since at the edge level the track & trace app is deployed on resource-constrained devices, it can store only a limited amount of data. As a result, an edge instance can store data for products processed in the corresponding work center for a limited amount of time - the stored data changes with the production progress. For the interlocking functionality, it is assumed that the real-time data required by the interlocking edge instances can be provided by the track & trace apps running locally on edge. Therefore, edge apps tolerate temporary interruption of connection between edge and higher levels as real-time data is mostly available locally.

To develop and customize track & trace as well as interlocking functionalities for various deployment levels, model-based design and metadata-driven architecture of modern MES apps are leveraged. Given a default configurable model of, for instance, track & trace functionality, a low-code engineering approach is used to customize and extend the default functionality to the various hierarchical levels. Note that the edge instances may also differ from each other. More specifically, the customization involves adaptation of data entities, message objects (discussed in the following) and API endpoints. Due to limited resources on edge devices, edge apps provide only a subset of functionalities of central, higher-level apps as discussed above. Therefore, edge apps are referred to or developed as sub-models of higher-level apps.

### Publish/Subscribe mechanism to synchronize edge and higher levels

To function properly, interlocking and track & trace apps require data from other MES apps or systems running in higher levels such as area or site. For example, they need up-to-date information about active work orders or quality measures, as well as information about status of other work centers found inside the shopfloor. Furthermore, to preserve the benefits of a central MES system and to decrease the chances of losing data due to failure of edge devices, information must be periodically sent from apps deployed at the edge to the higher-level instances - there can be employed for example either a time-based data update or a quantity-based update for batch/lot of products. For the former, the update granularity can be selected based on a certain time, while in the latter case, we can send an update can be sent once a certain number of products were processed from a given batch/lot. As a result, pub/sub communication pattern are used to allow deployed apps to subscribe to information/data from higher levels that are relevant only to the governed production machines (and vice versa), using publishing messages to specific logical channels called topics.

A communication mechanism based on the aforementioned pub/sub communication pattern is proposed to realize the exchange of information between apps deployed on the edge and other levels. The proposed mechanism has two objectives: first, it enables edge app to retrieve relevant data regarding the operations, products, and materials (see Figure 3) considering the governed production line capabilities, i.e., what operations can the production line perform, on what products, and what materials are needed to perform those operations; and second, it enables edge app to send production updates to the higher-level apps. For this reason, specific topics are created to transfer only the relevant data - topics are required to send data to and receive data from apps deployed at higher levels. However, the creation of such topics differs between the two data transfer directions.

Here, the scenario is considered first where data is transferred from higher-level track & trace app down to the edge instance (see Figure 2). Since the higher-level track & trace app handles all work orders (see Figure 3), the entire data cannot be published to one single topic - using one topic will be impractical considering that the subscribers reside on resource-constrained edge devices. Therefore, one needs to extract that aggregated data into multiple groups that are relevant to each production line at the shopfloor level which is a key step that allows edge apps to subscribe to only relevant data. The first approach can be based on creation of separate topics for each production line. In the present example (see Figure 2), an algorithm creates two different topics, e.g., /workcenters/ProductionLineA/requests and /workcenters/ProductionLineB/requests, each topic consisting of data such as requested operations, related materials, and target products, relevant to each production line.

In the second (more advanced) approach the algorithm creates multiple topics based on bill of process (BOP) of all to be manufactured products, e.g., /products/<ID>/bop/operations/<operation_name>, offering the possibility for any edge track & trace app to subscribe data only for products that require operations that can be performed by production machines in the specific production line. An example of such subscription could be /products/*/bop/operations/assemble (the star * denotes any product ID) that allows an edge application in a production line with an assembly robot to get data only for products requiring assembling. The second approach provides better production flexibility, resiliency and lowers engineering effort, since decision which production line performs required work order operations is done automatically at runtime based on actual operational needs and availability of production machines. In both approaches, when a work order for a new product is created in the higher-level track & trace app, the edge track & trace apps will automatically receive and cache all needed data before physical production even starts in "their" production line.

In the second transfer data scenario all created data in edge level (e.g., results of performed operations, collection of throughputs) has to be typically published to higher levels. Therefore, one single topic can be created per production line, in which the entire information is added that has been stored locally on the edge device, e.g., /workcenters/ProductionLineA/responses.

### Caching mechanism to provide data locally on edge

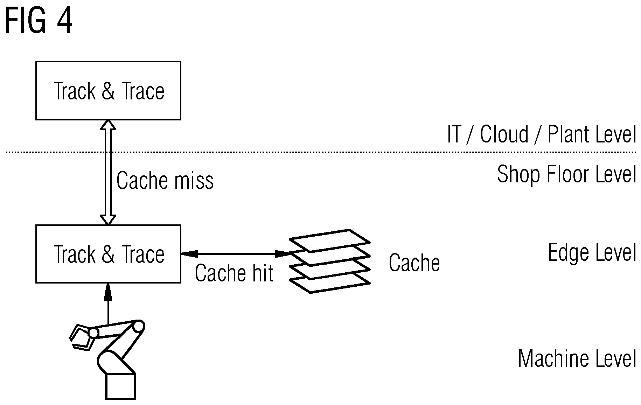

To benefit from deploying an app on edge devices, it has to be ensured that each app has access to the required information/data locally - having to retrieve every time the information from higher levels does not improve response times. To improve them, the pub/sub mechanism described above is combined with a cache mechanism, where the received data is cached at the location of deployed apps before particular production starts (see Figure 4). Since the information for each app is filtered, the limited resources of an edge device can store everything required by an app for a certain product. However, it might be the case that multiple distinct products are produced on the same group of production machines controlled by one single app. Therefore, information required by each individual product has to be downloaded- eventually reaching the limit of the cache and increasing the chances to have cache misses.

The potential of a cache miss can be minimized by employing the following proposed solution where in the cache only information is kept that is required by the current and future products. The present solution monitors the information available in the cache and the products that were already produced - all products that will be produced on the related production machines are known before the production is started. In this case, every time a product is finished, the information required by it is deleted and new information for future products is retrieved from the higher levels.

For example, it can be assumed that one track & trace and one interlocking app are deployed on an edge device that oversee multiple production machines that are part of the production step of N distinct products. Therefore, before the production begins, all the information required for all the products must be retrieved and stored locally into the cache. However, since the resources are limited, only a part of the information can be stored locally at the time, i.e., information required by first K products. It has to be noticed that if one does not manage to update the cache at runtime, some of the products will see an increase in production time due to cache misses - forcing the production devices to make a request to higher levels for the required information. However, with the present solution, there is always a buffer of information that is required by next K products resulting in no cache misses. To preserve this buffer inside the cache, when the production for the first product is finisched, the information stored inside the cache related to this first product is deleted and the information required by K + 1 product is retrieved from apps in higher levels.

Please observe that, in the example above, one considers the most common scenario where a product can be produced only using the production machines that are supervised by one instance of track & trace and interlocking apps. However, there might be a scenario when the product requires specific production machines that are supervised by a separate set of apps. For example, in Figure 2, two production lines A and B are present, each having a different instance of interlocking and track & trace deployed. Assuming that a product has to be produced that requires both production lines - it is important to mention that in this case, there is only one bill of process (BOP) for the product. As a result, one needs to ensure that when the product arrives at production line B, the progress made on production line A is known by the apps deployed on production line B - one is not interested in detail on the entire history of the product, but one is interested in the last step done. Otherwise, the interlocking app is not able to correctly check the product quality with the old information received when the production begins - without a synchronization of progress the interlocking app will not allow the continuation of production because the first part of the BOP is missing.

Here, the proposed synchronization mechanism can be used to track the progress over multiple app instances by propagating the required information. As previously stated, with our synchronization mechanism, periodic updates can be sent to higher levels regarding the progress made by a product on production line A. In return, apps in higher levels will publish the new received updates to a topic where apps of production line B are subscribed. As a result, the information on production line B can be updated as well.

However, there is one edge case that must be considered - depending on the frequency of the periodic updates, there might be a case when the progress is updated with at least one process left to be done on production line A. Therefore, the apps deployed on production line B will have only a partial update of the progress, resulting in an incorrect quality check for the first process done in production line B. To solve this potential issue, one must be sure that one sends an update to apps in higher levels exactly after the interlocking app of production line A gives the OK for the last available production step on that production line. As such, one will update production line B with the correct progress including the last step done in production line A.

It is important to mention that with the proposed caching and synchronization mechanism the chances to have a cache miss are significantly reduced. For example, because pub/sub communication pattern are used, one can be certain that the relevant data transferred between two production lines A and B is done faster than the time required to transfer the physical product between the two lines. As a result, by the time the product arrives at production line B, the two instances of track & trace and interlocking will have the latest information regarding the product saved in the cache, so the production can continue without any delays.

However, there might still be a scenario where one cannot avoid having a cache miss, i.e., the production line A finished the work on the product and the product is ready to continue on production line B. In this case, the relevant information is sent to the higher-level apps - ultimately, that information is being stored into the cache of production line B. However, a worker can observe that something is wrong with this product and takes it away to solve the issue. During this period, multiple other products are produced, changing the cache information of production line B. When the worker places the repaired product on production line B to continue its production, the cache will not hold the information required by this product, so one needs to retrieve the information from the higher-lever apps - introducing an extra delay due to the cache miss in this not so frequent scenario.

In summary, in the present invention, edge computing is used which requires downscaling of MES functionalities to resource-constrained edge devices. Distributed computing is also used which allows running of apps both on edge and cloud, pub/sub as the communication mechanism, and finally caching and data replication.

## Claims

1. A method for operating a plurality of edge production resources by a manufacturing execution system, said method, comprising the steps of:
a) providing a number of interlocking edge apps and track and trace edge apps to the production resources at shopfloor level;
b) providing a number of higher-level interlocking apps and higher-level track and trace apps also related to the edge production resources at an elevated supervision level wherein the edge apps provide only a subset of functionalities as compared to the central, higher-level apps at the elevated supervision level;
c) creating a bill of process at the elevated supervision level thereby defining a number of products to be produced on at least one of the edge production resources;
d) loading the data for the production of a subset of the number of products defined in the bill of process into the cache of the respective edge production resources;
e) producing the subset of the number of products according to the defined bill of process by the respective edge production resources;
f) exchanging data between the edge apps and the higher level apps during the production of the subset according to the functionalities defined in the edge apps and in the higher-level apps;
g) after completion of the production of the subset of the number of products, deleting all data related to this subset of the products in the caches of the edge production resources, and
h) processing the data related to this subset of the number of products in the higher-level apps according to the functionalities provided by these higher-level apps.

2. The method according to claim 1, wherein in the caches of the edge production resources only the data related to the current products and the future products to be produced is downloaded.

3. The method according to claim 1 or 2, wherein a synchronization mechanism is applied thereby sending periodic updates from the edge apps of a first number of edge production resources to the higher level apps which in return publish the new received updates to a topic where edge apps of a second number of other edge production resources are subscribed.

4. The method according to any of the preceding claims, wherein a publication/subcription mechanism is combined with a cache mechanism, where the received data is cached at the location of deployed edge apps before a particular production starts.

5. The method according to any of the preceding claims, wherein aggregated data is transferred from higher-level track & trace apps down to the edge apps and wherein the higher-level track & trace app handles all work orders and where the aggregated data is extracted into multiple groups that are relevant to the production lines at the shopfloor level thereby allowing the edge apps to subscribe to only data for the respective edge production resource of the respective production line.

6. The method according to any of the preceding claims, wherein the aggregated data is sorted into multiple topics based on a bill of process (BOP) of all products to be manufactured thereby offering the possibility for any edge track & trace app to subscribe to the topics of the aggregated data only for products that require operations that can be performed by edge production resources in a specific production line.

7. The method according to claim 8 wherein an edge app in said production line comprising an assembly robot downloads only the topic that provides data only for products requiring assembling by this assembly robot.
